# EUROPEAN PATENT APPLICATION

(11) **EP 2 009 528 A2**
(43) Date of publication of application: **31.12.2008**
(21) Application number: 08158921.0
(22) Date of filing: 25.06.2008
(51) Int. Cl.: G05B 19/05

(54) **Sequence program editing apparatus**

(30) Priority: 29.06.2007 JP 2007171864
(71) Applicant: Fanuc Ltd, Yamanashi 401-0597 (JP)
(72) Inventor: Hasegawa, Satoshi, Yamanashi 401-0597 (JP); Mochizuki, Mitsuru, Yamanashi 401-0597 (JP); Yamaki, Junichi, Yamanashi 401-0597 (JP)
(74) Representative: Ward, James Norman

(57) **Abstract**

A sequence program editing apparatus that automatically performs editing of function block instances in a sequence program when a definition of a function block is modified. When a function block definition defining the number of parameters or attributes of parameters is modified, the sequence program is searched to find a function block instance using the function block of which definition is modified. The found function block instance is altered so that the number of parameters or attributes of parameters conform with the modified definition of the function block.

## Description

### BACKGROUND OF THE INVENTION

### 1. Field of the Invention

The present invention relates to a sequence program editing apparatus capable of investigating statuses of function block instances used in a sequence program when a definition of a function block is modified, and particularly to a sequence program editing apparatus capable of automatically checking conformity of the function block instance with the modified definition of the function block and re-assigning arguments of input and output parameters.

### 2. Description of Related Art

There is known a technique of creating and using function blocks by object-orientated programming languages. However, it has been hardly possible to automatically editing a function block instance when a definition of a function block is modified (see JP 2001-51704A).

### SUMMARY OF THE INVENTION

The present invention provides a sequence program editing apparatus in which efficiency of an editing operation of a sequence program is improved when modifying a definition of a function block.

A sequence program editing apparatus of the present invention edits a sequence program including function blocks. The sequence program editing apparatus comprises: inputting means that allows an operator to input data for modifying a definition of a function block in the sequence program; searching means that searches the sequence program to find a function block instance using the function block of which definition is modified; and altering means that alters the found function block instance so that the number of parameters or attributes of parameters conform with the modified definition of the function block.

The altering means may discriminate parameters unchanged by the modification of definition of the function block and reassign attributes of the unchanged parameters to the altered function block instance.

The sequence program editing apparatus may further comprise display means that displays a position of a parameter changed or added by the modification of definition of the function block or a position of an attribute of the changed or added parameter in the altered function block instance distinctively from unchanged parameters.

The searching means and the altering means may be automatically operated when the definition of the function block is modified.

According to the present invention, when a function block of which definition has been modified is designated, the sequence program is automatically searched to find a function block instance using the function block, the found function block instance is deleted and the modified definition of the function block is re-instanced to save manual re-input of data by an operator. An operator is only required to input data of the parameters of which the number or variable types are changed and thus attributes of the parameters can not be reassigned, to thus perform editing of the sequence program efficiently.

### BRIEF DESCRIPTION OF THE DRAWINGS

FIG. 1 is a block diagram of a sequence program editing apparatus according to an embodiment of the present invention;
FIG. 2 is a schematic view of a frame on a display device showing components of a function block;
FIG. 3 is a schematic view showing a function block;
FIG. 4 is a schematic view showing a function block instance;
FIG. 5 is a schematic view of a function block defining and editing frame in which an input parameter of a symbol name New and a data type BYTE is added;
FIG. 6 is a schematic diagram showing an example of searching the sequence program to find a function block instance using the function block of which definition is modified;
FIG. 7 is a diagram showing examples of tables for determining conformity before and after modification;
FIG. 8 is a diagram showing an example of storing arguments of an input part and an output part of the found function block instance;
FIG. 9 is a diagram showing an example of deleting the found function block instance;
FIG. 10 is a diagram showing an example of re-instancing of the modified function block definition;
FIG. 11 is a diagram showing an example of re-assigning of arguments of the input part and the output part for the parameters of which data types, symbol names and variable types are not changed or added;
FIG. 12 is a diagram showing an example of displaying a position of the changed or added parameter or an attribute thereof distinctively;
FIG. 13 is a flowchart showing the re-instancing process; and
FIG. 14 is a continuation of flowchart of FIG. 13.

### DETAILED DESCRIPTION

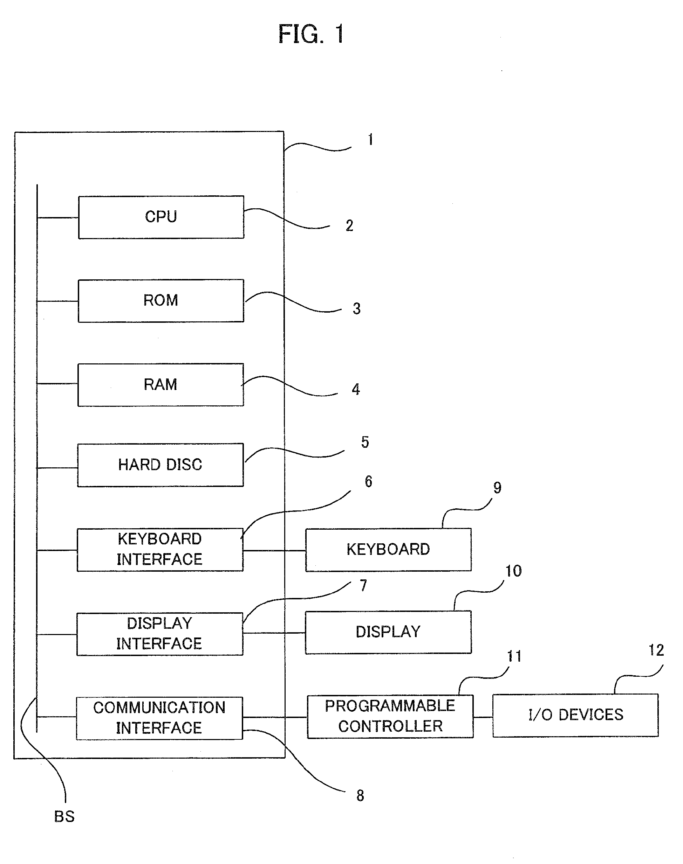

FIG. 1 shows a sequence program editing apparatus 1 according to an embodiment of the present embodiment. A processor (CPU) 2 is connected to a ROM 3, a RAM 4, a hard disc 5, a keyboard interface 6, a display interface 7 and a communication interface 8 through a bus BS. The processor 2 controls the sequence program editing deice 1 according to a system program stored in the ROM 3. A program for editing a sequence program according to the present invention is stored in the ROM 3. The RAM 4 is used for temporary storage of data, and sequence programs are stored in the hard disc 5. A keyboard 9 is connected to the keyboard interface 6, and a display 10 such as a CRT and a LCD is connected to the display interface 7. The communication interface 8 is connected to a programmable controller 11 which controls I/O devices 12.

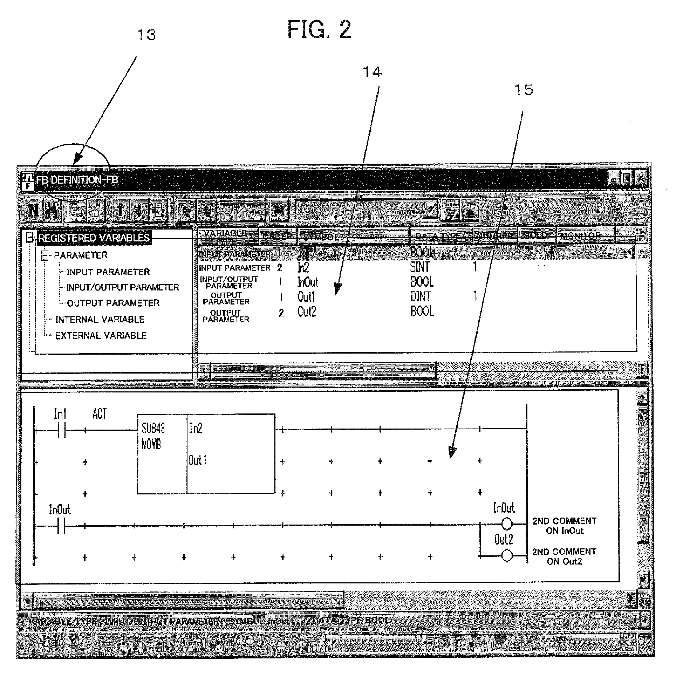

FIG. 2 shows a flame on the display 10 in which components for definition of a function block are displayed. A reference numeral 13 denotes a name of a function block to be defined. A reference numeral 14 denotes information such as parameters and internal variables to be used in the definition. In FIG. 2, a function block FB comprises variables of input parameters In1 and In2, an input/output parameter InOut and output parameters Out1 and Out2. A reference numeral 15 denotes a sequence program. The function flock FB is shown by a ladder diagram as the sequence program 15. "BOOI" indicates a bit data type and "SINT/DINT" indicates an integer data type.

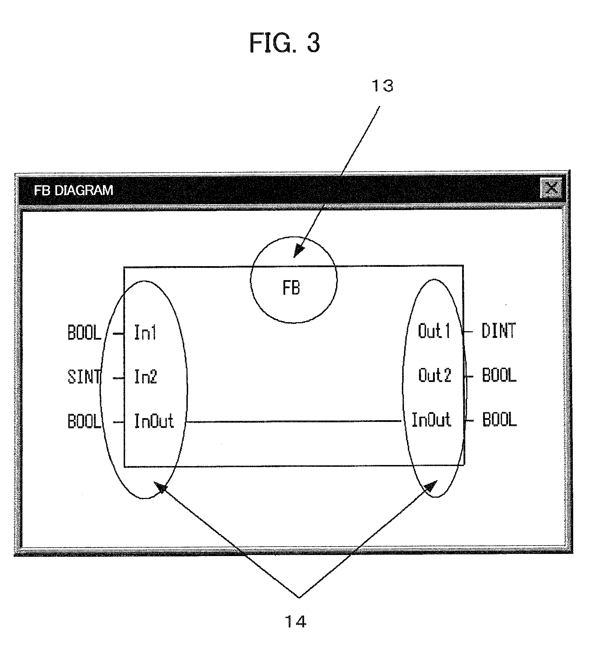

FIG. 3 shows a diagram of the function block having input parameters and output parameters created based on the ladder diagram as shown in FIG. 2.

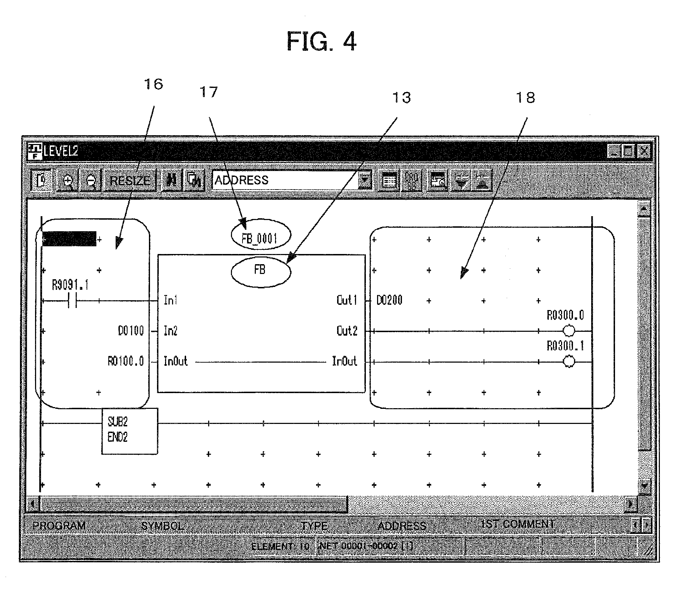

FIG. 4 shows a diagram of a sequence program including a function block instance using the function block definition. A reference numeral 16 denotes an input part, a reference numeral 17 denotes a function block instance name "FB_001", and a reference numeral 18 denotes an output part. "R9091.1" and "D0100" denote PC (programmable controller) addresses, and the former is of a bit type having a decimal point and the latter is of a byte type.

The sequence program is executed from the left-hand to the right-hand and from the upper portion to the lower portion as follows;
(1) Transferring of arguments of the input part to the input parameters:
   Contents of R9091.1 are transferred to the input parameter In1,
   Contents of D0100 are transferred to the input parameter In2, and
   Contents of R0100.0 are transferred to the input/output parameter InOut
(2) Processing in FB_0001
(3) Transferring of contents of the output parameters to arguments of the output part:
   Contents of the output parameter Out1 are transferred to D0200,
   Contents of the output parameter Out2 are transferred to R0300.0, and
   Contents of the input/output parameter InOut are transferred to R0300.1.

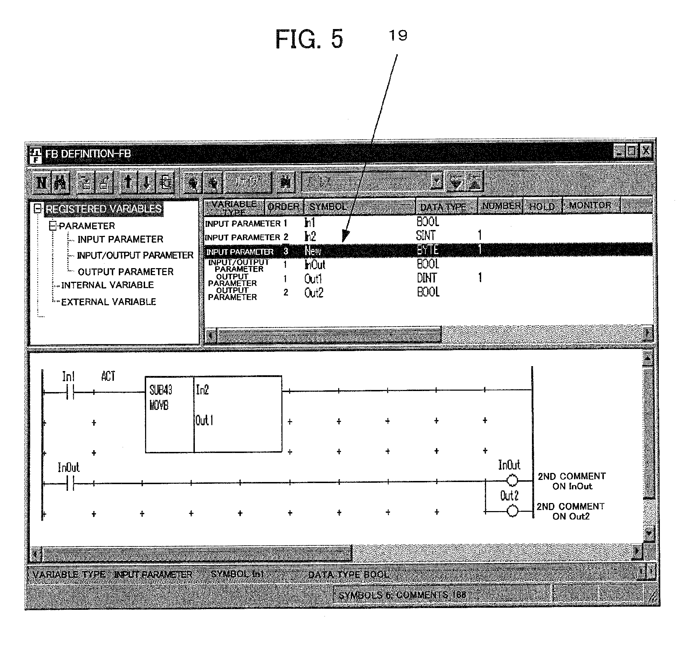

FIG. 5 shows an example of a function block definition/editing frame on the display 10 in which a new parameter is added. An input parameter 19 having the arranging order "3", the symbol name "New" and the data type "BYTE" is newly added to definition of the function block FB.

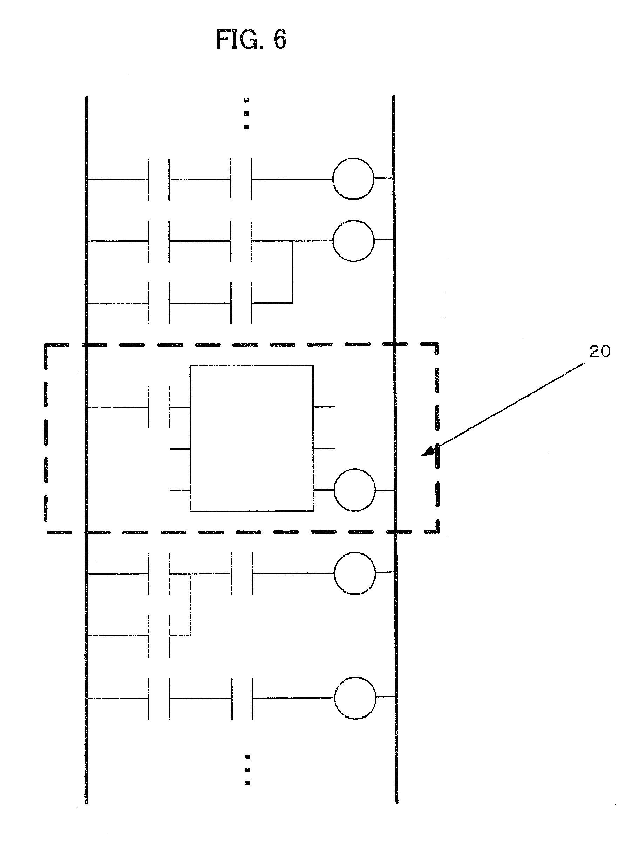

FIG. 6 shows an example of a sequence program searched to find a function block instance in the re-instancing process. A block surrounded by the dotted line shows a found function block instance 20. When the definition of the function block is modified, the name of the function block whose definition is modified is notified from the function block definition editing process to the re-instancing process. The re-instancing process receives the definition name of the function block and searches the sequence program to find a function block instance using the function block definition.

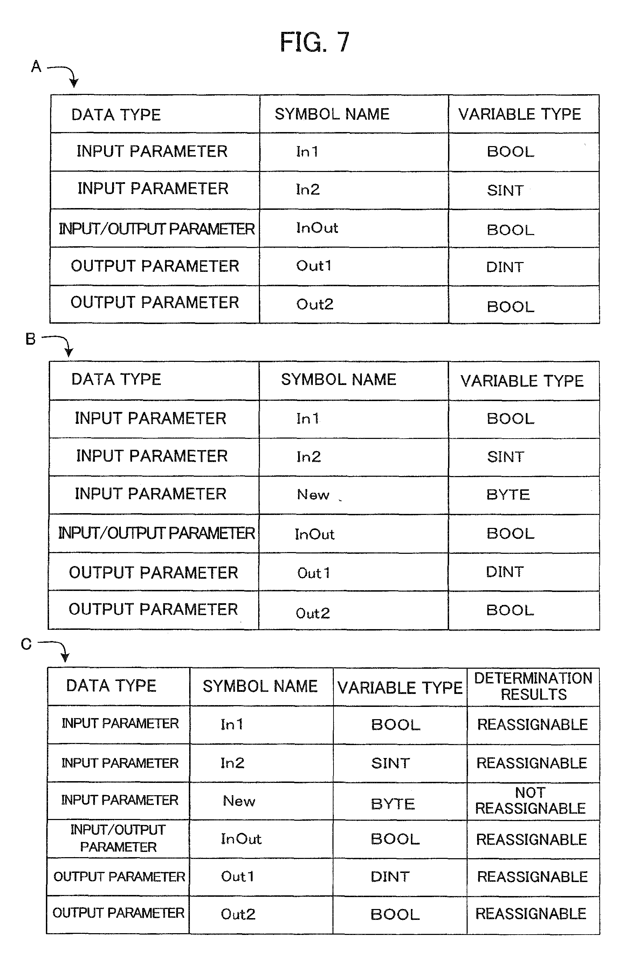

FIG. 7 shows tables A, B and C created when a function block instance having the function block whose definition has been modified is found. These tables are stored in the RAM 4 shown in FIG. 1. The table A is prepared as a parameter list before the modification of definition based on the found function block instance. The table B is prepared as a list of parameters after the modification of definition based on the modified definition of the function block. The table C is prepared by checking conformity of data in the table A and the table B, and determining arguments of the input part and the output part for which parameters have not changed after the modification of the definition of the function block to be re-assignable. Thus, arguments of the input parameter of the symbol name "New" and variable type "BYTE" which has been added in the modification of definition are determined to be not re-assignable.

Using the tables A, B, C as shown in FIG. 7, the procedure of re-instancing of the function block definition will be described.

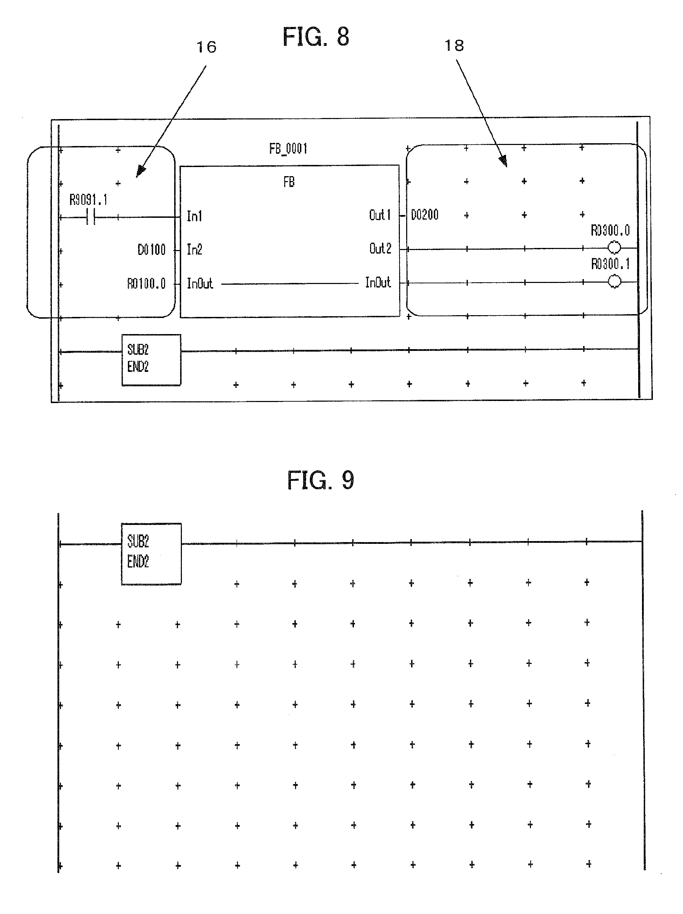

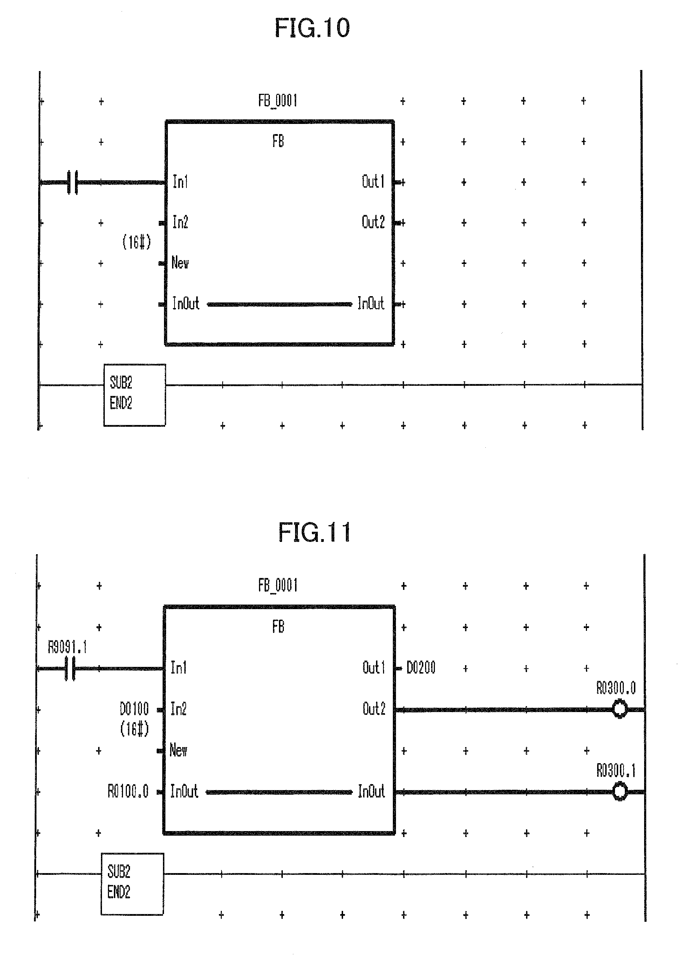

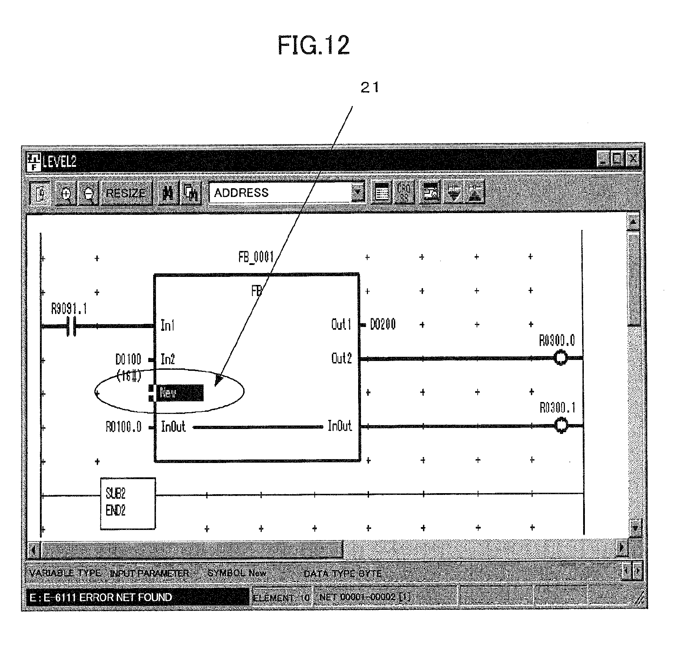

FIG. 8 shows storing of arguments of the input part and the output part of the function block instance before the modification. FIG. 9 shows deletion of the function block instance using the function block definition before the modification, prior to the re-instancing of the function block definition. FIG. 10 shows re-instancing of the function block definition. FIG. 11 shows reassigning of arguments of the input part and the output part corresponding to the parameters whose data types, symbol names and variation types before and after the modification are the same. FIG. 12 shows a frame on the display 10 in which a position of a parameter 21 or an attribute of the parameter 21 changed or added by the modification of definition is displayed with a different color or displayed to blink distinctively from the unchanged parameters or attributes thereof.

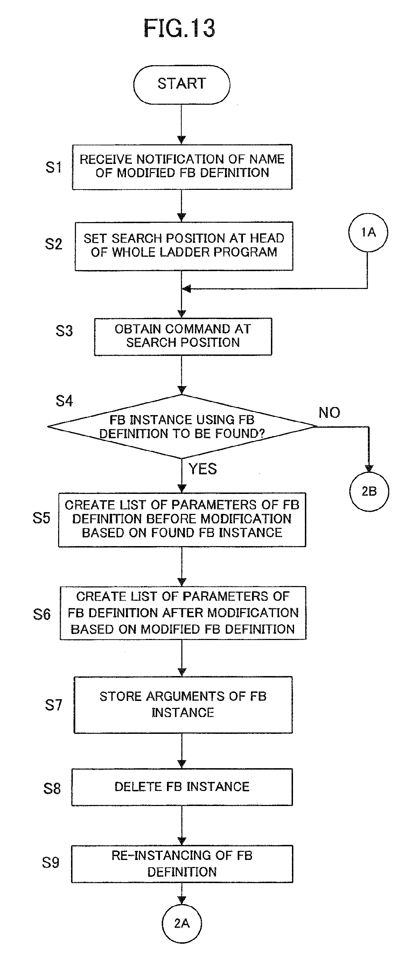

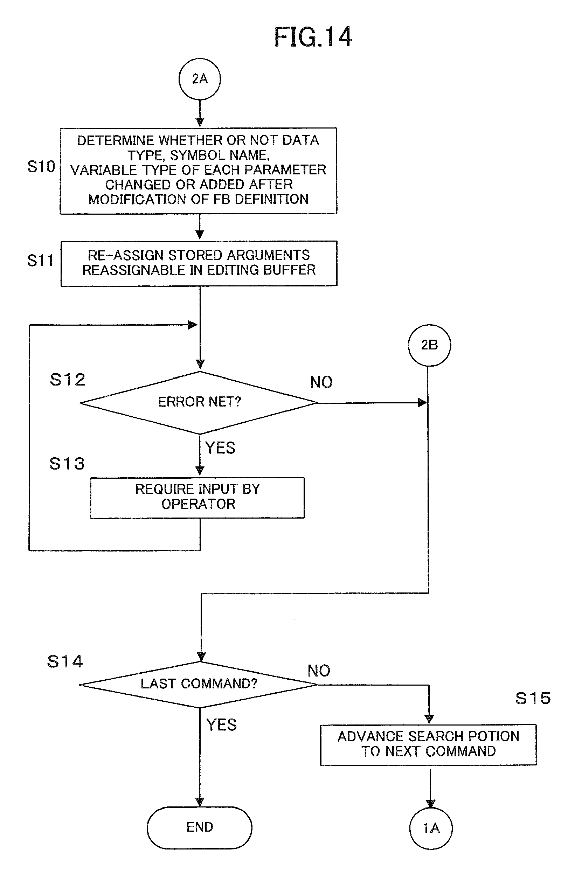

FIGS. 13 and 14 are flowcharts showing the re-instancing process to be performed by the CPU 2 in FIG. 1 when the function block definition is modified. When the re-instancing process is started, the CPU receives a notification of a name of the modified function block definition (Step S1). A search position is set to a head of the whole ladder program (Step S2). A command is obtained from the search position (Step S3). It is determined whether or not it is an function block instance using the function block definition to be found (Step S4). If it is determined NO, the procedure proceeds to Step S14. If it is determined YES, a list of parameters before the modification of the function block definition is created from the found function block instance (Step S5). A list of parameters after the modification is created from the modified function block definition (Step S6). The arguments of the found function block instance are stored (Step S7). The found function block instance is deleted (Step S8). The modified function block definition is re-instanced (Step S9). Then, the procedure proceeds to Step S10.

It is determined whether or not a data type, a symbol name and a variable type of each of the parameters has been changed or added after the modification of definition (Step S10). The arguments for the parameters of which data types, symbol names and variable types have not been changed or added are reassigned in an editing buffer (Step S 11). It is determined whether or not the function block instance with the reassigned arguments cause an error net (Step S12). If it is determined YES, an input of necessary data is required to an operator (Step S13). If it is determined NO in Step S12, it is determined whether the obtained command is a last one or not (Step S14). If it is determined that the command is the last one, the procedure is terminated. If it is determined that the command is not the last one, the search position is advanced by one and the procedure returns to Step 3.

The determination of an error net at Step S12 is performed as follows;

In Step 11, the arguments for the parameters of which data types, symbol names and variable types are not changed or added after the modification of the function block definition are reassigned in the editing buffer. Thus, according to the table C in FIG. 7, the argument for the input parameter "New" newly added by the modification of the definition remains undefined. Therefore, it is determined that the sequence program includes an error net as lack of information since the input parameter can not be omitted. The error net is displayed by red color or thick lines so as to prompt the operator to input necessary information.

## Claims

1. A sequence program editing apparatus for editing a sequence program including function blocks, comprising:
inputting means that allows an operator to input data for modifying a definition of a function block in the sequence program;
searching means that searches the sequence program to find a function block instance using the function block of which definition is modified; and
altering means that alters the found function block instance so that the number of parameters or attributes of parameters conform with the modified definition of the function block.

2. A sequence program editing apparatus according to claim 1, wherein said altering means discriminates parameters unchanged by the modification of definition of the function block and reassigns attributes of the unchanged parameters to the altered function block instance.

3. A sequence program editing apparatus according to claim 1, further comprising display means that displays a position of a parameter changed or added by the modification of definition of the function block or a position of an attribute of the changed or added parameter in the altered function block instance distinctively from unchanged parameters.

4. A sequence program editing apparatus according to claim 1, wherein said searching means and said editing means are automatically operated when the definition of the function block is modified.
